# EUROPEAN PATENT SPECIFICATION

(11) **EP 1 098 474 B1**
(45) Date of publication and mention of the grant of the patent: **03.03.2004**
(21) Application number: 99650102.9
(22) Date of filing: 05.11.1999
(51) Int. Cl.: H04L 12/24

(54) **A telecommunication network modelling system**
System zur Modellierung von Telekommunikationsnetzwerken
Un système pour modèliser un réseau de télécommunication

(43) Date of publication of application: 09.05.2001
(73) Proprietor: Altion Technolgies Limited, Dublin 4 (IE)
(72) Inventor: Fitzpatrick, Peter, Dublin 6 (IE); O'Driscoll, Magnus, Dublin 6 (IE)
(74) Representative: Weldon, Michael James

(56) References cited:
- WO-A-98/47265
- FREDERICKS A A ET AL: "MASE- AN INTEGRATED ENVIRONMENT FOR MODELING, ANALYSIS AND ENGINEERING OF COMPUTER / COMMUNICATIONS SYSTEMS" IEEE GLOBAL TELECOMMUNICATIONS CONFERENCE (GLOBECOM),US,NEW YORK, IEEE,1995, pages 1688-1692, XP000633580 ISBN: 0-7803-2510-9
- KNUTSON C D: "BUILDING THE MODEL NETWORK" BYTE,US,MCGRAW-HILL INC. ST PETERBOROUGH, vol. 21, no. 10, 1 October 1996 (1996-10-01), pages 101-102,104, XP000683574 ISSN: 0360-5280
- ISHIWA N ET AL: "AN EXPERT SYSTEM FOR PLANNING PRIVATE NETWORKS" NEC RESEARCH AND DEVELOPMENT,JP,NIPPON ELECTRIC LTD. TOKYO, vol. 35, no. 3, 1 July 1994 (1994-07-01), pages 306-314, XP000468662 ISSN: 0547-051X

## Description

The invention relates to a telecommunication network modelling system of the type comprising a processor connected to user interface and data storage devices, in which the processor is programmed to build and maintain under user instructions a network model, and to generate network planning and administration outputs in response to user queries by interrogating the model.

Typically, the administration functions of such a system are to allocate free capacity of different types of demands on a transport network, administer network build and equipment allocation, and perform fault analysis and correlation. For planning, the system is typically used for analysing the impact of demand forecasts on the network utilisation. For example, Fredericks AA et al: "MASE: an integrated environment for modelling, analysis and engineering of computer/communications systems" IEEE Global Telecommunications Conference (GLOBECOM), US, New York, IEEE, 1995 pp. 1688-1692 describes a tool comprising a processor and user interface for building a network model under user instruction and for performing network analysis and simulation using this model.

In general, the existing systems suffer from the problems of being inflexible so that it is time-consuming for the user to program variations in network elements such as variations caused by equipment from different vendors for performing similar specified tasks. Another problem is that the systems are generally configured for responding to queries of a certain type and thus the manner in which the system is used is restricted.

It is therefore an object of the invention to provide a modelling system of the type set out above which has a flexible core structure so that it can be adapted by a user at both network build and maintenance stages to variations in a network and equipment of the network.

According to the invention, there is provided a telecommunication network modelling system comprising a processor connected to user interface and data storage devices, wherein the processor is programmed to build and maintain under user instructions a network model, and to generate network planning and administration outputs in response to user queries by interrogating the model, characterised in that the processor network build means comprises:
means for building a dataset defining a plurality of functions;
means for building a dataset defining hardware units related to functions on the basis of the capacity of each hardware unit;
means for interrogating the datasets with a query comprising requirements for communication trails, for identifying available candidate nodes of the hardware dataset, and for interactively selecting from the set of candidate nodes; and
means for generating a network model comprising identifiers of the selected hardware entities which define trail terminations.

In one embodiment, each hardware dataset is related to a function or it is related to a plurality of child hardware datasets which are each related to a function.

In another embodiment, the function dataset for each function includes:-
function definition records;
point definition records defining interface points to the function;
connectivity definition records defining inter-function point connections; and
containment definition records defining intra-function point containment.

In one embodiment, the function dataset for each function further comprises records identifying points affected by the function.

In another embodiment, each hardware dataset comprises point definition records defining network interface points corresponding to function points, and containment definition records defining containment relationships between a hardware unit and sub-units, between points, and between the hardware unit and a function.

In a further embodiment, each hardware dataset comprises connectivity definition records defining inter-connectivity of hardware sub-units.

In one embodiment, the network model generating means comprises means for populating relational tables with hardware point definition records for trail termination points.

In a further embodiment, the network model generating means comprises means for populating the relational tables with hardware point definition records for connections which together form a trail.

In one embodiment, the network model generating means comprises means for dynamically maintaining a table correlating the equipment model with the network model.

The invention will be more clearly understood from the following description of some embodiments thereof, given by way of example only with reference to the accompanying drawings in which:-
Fig. 1 is an overview schematic diagram of a telecommunication network modelling system of the invention;
Fig. 2 is a diagram illustrating part of the network and the manner in which it is modelled; and
Figs. 3 and 4 are entity diagrams illustrating relationships of modelling data records.

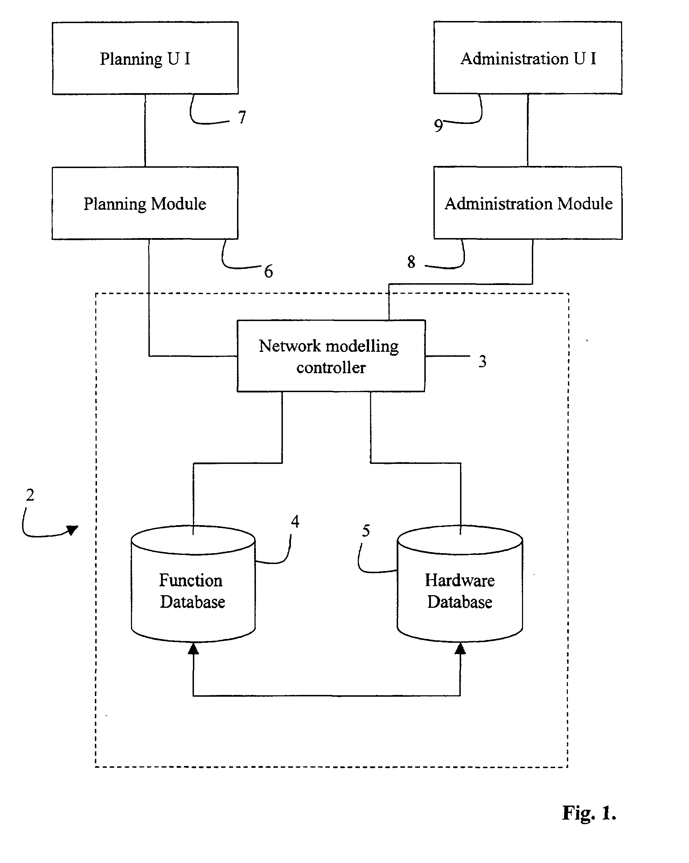

Referring to Fig. 1, there is shown a telecommunication network modelling system 1. The system 1 comprises a network information model 2 which comprises a modelling controller 3 connected to a function database 4 and a hardware database 5. The databases 4 and 5 are inter-related. The system 1 also comprises modular tools for performing tasks using the network information model 2. These include a planning module 6 connected to a planning user interface 7 and an administration module 8 connected to an administration user interface 9.

The network information model 2 is generated by initially creating the function database 4 by defining each function as a dataset, which in this embodiment is a set of related tables. For example, a function may be multiplexing of four 2 Mb/s inputs to provide a single 8 Mb/s output. When the function database has been built, the hardware database 5 is generated. Each hardware unit is associated with a function defined in the database 4, or it comprises sub-units which are themselves each associated with a function of the database 4. Building of a hardware dataset is simplified by automatically allocating parameter values according to the associated function dataset. The build process involves creating datasets both for the hardware units and the sub-units. Completion of the network information model involves mapping the hardware datasets to network node data to instantiate network nodes and their links.

As stated above, each function is defined by a database which comprises a set of related tables. The first such table is a function definition function_def table such as set out below.

| **Field Names** | **Sample 1** | **Reference or Foreign Key Table** |
|---|---|---|
| FUNCTION_DEF_ID | 24152 | Affected_by_def, |
| USER_LABEL | STM-1/AU4 BID | |
| START_DATE | 0 | |
| START_STATUS | I | Ref_status_code |
| END_DATE | 99999999 | |
| END_STATUS | P | Ref_status_code |

The function_def_id field is a unique key into the function_def table. It also serves a key into an affected_by_def table in which all points affected by the function_def are listed. The user_label field is a user-generated description uniquely identifying the function definition.

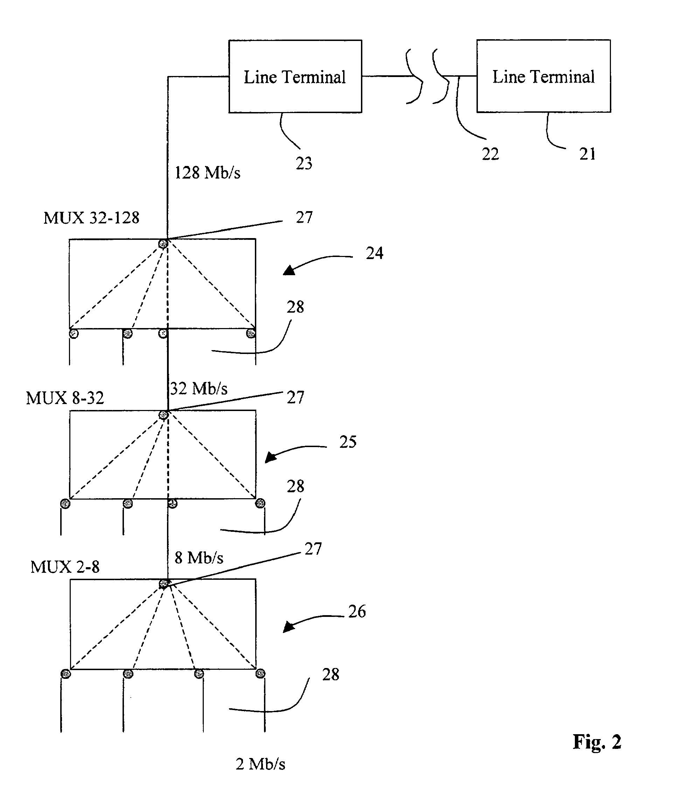

Referring now to Fig. 2, the context in which a model is generated is illustrated by way of a particular simple example. Part of a network is illustrated in Fig. 2 which comprises a remote line terminal 21 connected by a fibre optic link 22 to a local line terminal 23. The line terminal 23 is in turn connected to a 32-128 multiplexer 24. This is in turn connected to four 8-32 multiplexers 25, each of which is in turn connected to four 2-8 multiplexers 26. The 2-8 multiplexer 26 receives four 2 Mb/s imputs. These are multiplexed to provide an 8 Mb/s output. The 8-32 multiplexer 25 receives four 8 Mb/s inputs which it multiplexes to provide a 32 Mb/s output. The 32-128 multiplexer 24 receive four 32 Mb/s inputs which it multiplexes to provide a single 128 Mb/s output fed to the line terminal 23. An important aspect of the invention is the fact that there is a single function defined for each of the multiplexing and line terminal parts of the network shown in Fig. 2. Thus, the 2-8 multiplexer 26 is defined as a single function as is the 8-32 multiplexer 25. However, the hardware database 5 defines hardware units both as overall units such as 2 Mb/s to 128 Mb/s and also as sub-units such as 2 Mb/s to 8 Mb/s multiplexers.

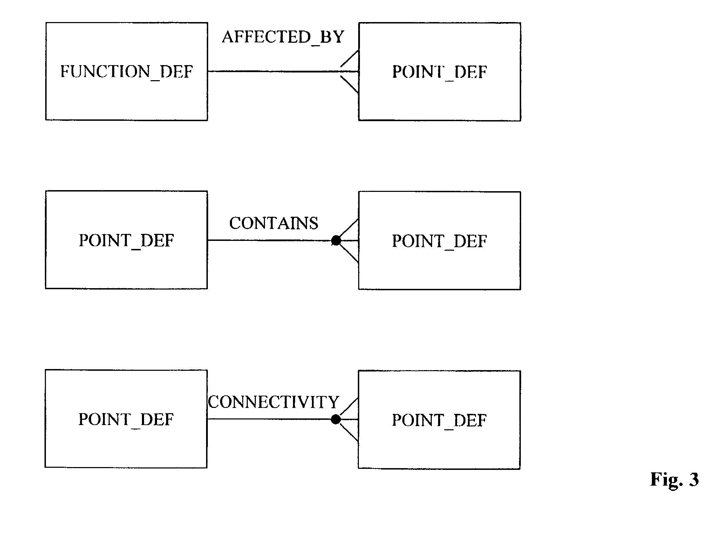

Returning now to building the function database 4, referring to Fig. 3, an entity model for the function dataset is illustrated. As is clear from this diagram, a function is affected by one or more point definitions. A point definition is an interface point between a function and a link which is external to it. For example, in Fig. 2 there are points 27 which are output points for the different multiplexing stages. In addition, there are input points 28 to these functions. The process of building the function database 4 involves generating a table which identifies points which are affected by the current function. The next step involves generating a connectivity table ("connectivity_def"), such as illustrated below.

| **Field Names** | **Sample 1** | **Sample 2** | **Reference or Foreign Key Table** |
|---|---|---|---|
| UP_STREAM_POINT_DEF_ID | 24154 | 24155 | Point_def |
| DOWN_STREAM_POINT_DEF_ID | 24156 | 24157 | Point_def |
| START_DATE | 0 | 0 | |
| START_STATUS | I | I | Ref_status_code |
| END_DATE | 99999999 | 99999999 | |
| END_STATUS | I | I | Ref_status_code |

Connectivity definitions are made between points of different functions. For example, the output point 27 of the multiplexer 26 is connected to one of the input points 28 of the multiplexer 25. This table includes up-stream and down-stream indicators to indicate the direction in relation to network traffic.

A containment definition table ("contains_def") such as set out below is then generated.

| **Field Names** | **Sample 1** | **Sample 2** | **Reference or Foreign Key Table** |
|---|---|---|---|
| PARENT_DEF_ID | 24155 | 24154 | Point_def |
| PARENT_CODE | 406 | 406 | Ref_nw_object_code |
| CHILD_DEF_ID | 24158 | 24158 | Point_def, |
| CHILD_CODE | 407 | 407 | Ref_nw_object_code |
| START_DATE | 0 | 0 | |
| START_STATUS | I | I | Ref_status_code |
| END_DATE | 99999999 | 99999999 | |
| END_STATUS | P | P | Ref_status_code |

Containment defines linking of parent and child points within a function. For example, the output point 27 of the multiplexer 25 contains the four 8 Mb/s interface points of the same function.

The connectivity and containment tables relate to points and these are defined by a point definition table ("point_def"). This table defines the characteristics of each point.

A point_def_id field provides a key into many other database tables, the main ones are connection_def, contains_def, connectivity_def, affected_by_def.. A charinfo field is a key into the ref_ct_charinfo table, which contains all the characteristic information codes which refer to the capacity of a point.

An order_no field is used to internally order groups of points associated with a hardware unit. A term_point_code field is a key into a ref_term_point_code table which contains all the possible termination point codes, i.e. TTP, CTP,GTP. A term_type_code field is a key into the ref_term_code table which contains all the possible termination point type codes, i.e. SOURCE, SINK, BID, UNDEF. Finally, an interface_code field is a key into the ref_interface_code table which contains all the possible interface codes, i.e. coaxial, fibre optic etc

It will be appreciated from the above that the function database comprises a dataset for each function in which, as set out in Fig. 3, point definitions are affected by functions, points are contained within points, and points are connected to points of different functions.

A hardware unit or sub-unit is defined when the network is being built, and on an on-going basis as new hardware is defined. Each hardware dataset is associated with a pre-defined function, or it may comprise sub-units which are themselves associated with a function. A hardware dataset is automatically allocated new points and containment relationships based on the associated function. Initially, a hardware definition (hardware_def) table such as the following is generated.

| **Field Names** | **Sample Entry** | **Sample Entry** | **Reference or Foreign Key Table** |
|---|---|---|---|
| HARDWARE_DEF_ID | 1098080 | 1098182 | Hardware_def_inst |
| HARDWARE_FUNC | 1611 | 1611 | Ref_hardware_func |
| USER_LABEL | SMA4 LWA1 STMle | SMA4 LWA2 STMle | |
| MANUFACTURER_ID | 0 | 0 | |
| START_DATE | 0 | 0 | |
| START_STATUS | I | I | Ref_status_code |
| END_DATE | 99999999 | 99999999 | |
| END_STATUS | P | P | Ref_status_code |

This table is updated every time a new hardware unit or sub-unit is defined, and the most recently defined pieces of equipment can be found in the bottom rows of the table. The hardware_def_id value can be used to key the hardware_def_inst table. The hardware_func value can be used to key the ref_hardware_func table. For example a hardware_func value of 1611 references a hardware function description 'Aggregate Card'. The user_label field is created by the user .

A hardware definition instruction table (hardware_def_inst) is then generated. An example is as follows.

| **Field Name** | **Sample Entry** | **Sample Entry** | **Reference or Foreign Key Table** |
|---|---|---|---|
| HARDWARE_DEF_INST_ID | 1098081 | 1102145 | Affected_by_def |
| | | | Contains_def |
| HARDWARE_DEF_ID | 1098080 | 1098080 | Hardware_def |
| ORDER_NO | 0 | 1 | |
| HARDWARE_DEF_IND | 1 | 0 | |

The hardware_def_inst table is closely related to the hardware_def table as for every entry in hardware_def there may be one or more entries in hardware_def_inst. The hardware_def_inst_id references the affected_by_def and the contains_def table as the parent_def_id. The order_no field indicates the ordering of sub-hardwares which make up a piece of equipment as the user defined them. For example if a hardware has an order_no of 3 this means that it is a sub-unit in a hardware unit already present in the hardware_def_inst table, and that it is defined as being the third piece of sub hardware which makes up that hardware. A hardware_def_ind of 1 indicates that this instance is the original and hence first instance of the definition. 0 indicates that the instance is a subsequent instance of the definition.

A table is then generated which records the groupings of point definitions which are related to hardware definition or to function definition. An example is as follows.

| **Field Names** | **Sample 1** | **Sample 2** | **Reference or Foreign Key Table** |
|---|---|---|---|
| PARENT_DEF_ID | 1098081 | 1098081 | Hardware_def_inst |
| PARENT_CODE | 402 | 402 | Ref_nw_object_code |
| CHILD_DEF_ID | 1098178 | 1098180 | Point_def |
| CHILD_CODE | 407 | 407 | Ref_nw_object_code |
| START_DATE | 0 | 0 | |
| START_STATUS | I | I | Ref_status_code |
| END_DATE | 99999999 | 99999999 | |
| END_STATUS | P | P | Ref_status_code |

This table records the groupings of point definitions which are related to a hardware definition or to a function definition. The hardware definition for a piece of equipment determines the number of points in a group that are affected by that hardware.

Every entry that has the same parent_def_id value is affected by the same hardware definition. The parent_def_id field has the same value as the hardware_def_inst_id value for a hardware, when the parent_code is 402. The child_code may be 407 (CTP) or 406(TTP). The child_def_id is a key into the point_def table where all point definition information is stored.

The parent_code and child_code fields are both references into the Ref_nw_code_table. This table contains a description of the type of object, for example whether an object is a CTP or TTP or hardware or function. In Sample 1 and 2 above the parent_code of 402 indicates hardware objects, while the child_code of 407 indicates CTP point objects.

A containment definition table ("contains_def") is then generated:

| **Field Names** | **Sample 1** | **Sample 2** | **Sample 3** | **Reference or Foreign Key Table** |
|---|---|---|---|---|
| PARENT_DEF_ID | 1098081 | | 1095811 | Hardware_def_inst, |
| | | 1098114 | | Point_def, |
| PARENT_CODE | 402 | 407 | 402 | Ref_nw_object_code |
| CHILD_DEF_ID | 24160 | | | Function_def, |
| | | | 1095803 | Hardware_def_inst, |
| | | 1098178 | | Point_def |
| CHILD_CODE | 408 | 407 | 402 | Ref_nw_object_code |
| START_DATE | 0 | 0 | 0 | |
| START_STATUS | I | I | I | Ref_status_code |
| END_DATE | 99999999 | 99999999 | 999999999 | |
| END_STATUS | P | P | P | Ref_status_code |

This table records the following containment relationships
- between hardware units and sub-units
- between two points
- between hardware and a function

When the user defines the containment for a particular equipment it is this table which will be updated.

The parent_def_id and the parent_code together define the parent part of the containment relationship. For example if the parent_code is 402 this indicates a hardware object and that the parent_def_id is a key into the hardware_def_inst table. To find the sub-hardwares which make up a piece of equipment, the contains_def table can be referenced using the hardware_def_inst table as the parent_def_id. The child_code_ids in the contains_def table are themselves hardware_def_inst_ids keys in the hardware_def_inst table

The child_def_id and the child_code together define the child part of the containment relationship. For example if the child_code is 407 this indicates a CTP object and that the child_def_id is a key into the point_def table.

Sample 1 details the containment relationship between hardware and a function. The parent_def_id value is a key into the hardware_def_inst table, the child_def_id value is a key into the function_def table. The parent_code 402 indicates hardware while the child_code 408 indicates a function. The piece of equipment is said to contain a function, meaning that it will behave according to a particular function.

Sample 2 details a containment relationship between a level TUG-2 CTP point and three other level TU-12 CTP points, (only one of which is shown above). The CTP levels can be checked by referencing the point_def table to get the level type and then referencing the ref_ct_level table to determine the level of each point.

Sample 3 details the containment relationship that exists between hardware items, if the piece of equipment contains one or more items (one of which is shown above). The affected_by points for each sub-hardware in the list can be obtained by referencing the child_def_id from the contains_def tables as parent_def_id in the affected_by_def table.

Finally, a hardware point definition table is generated as follows.

| **Field Names** | **Sample 1** | **Sample 2** | **Sample 3** | **Reference or Foreign Key Table** |
|---|---|---|---|---|
| POINT_DEF_ID | 1098082 | 1098178 | 1098180 | Connection_def, |
| | | | | Connectivity_def, |
| | | | | Contains_def, |
| | | | | Affected_by_def |
| LEVEL_TYPE | 1036 | 1022 | 1022 | Ref_ct_level |
| CHARINFO | 1 | 14 | 14 | Ref_ct_charinfo |
| ORDER_NO | 1 | 61 | 62 | |
| CHANNEL_NO | 0 | 1 | 2 | |
| TERM_POINT_CODE | 701 | 702 | 702 | Ref_term_point_code |
| TERM_TYPE_CODE | 603 | 603 | 603 | Ref_term_type_code |
| INTERFACE_CODE | 202 | 205 | 205 | Ref_interface_code |
| START_DATE | 0 | 0 | 0 | |
| START_STATUS | I | I | I | Ref_status_code |
| END_DATE | 99999999 | 99999999 | 99999999 | |
| END_STATUS | P | P | P | Ref_status_code |

This table contains the individual characteristics of every point in the database.
The point_def_id field provides a key into many other database tables, such as connection_def, contains_def, connectivity_def, affected_by_def.

The level_type field is a key into the ref_ct_level table which contains SDH level codes for trails and connections. The point described in Sample 2 has a level_type value of 1022. This can be used to reference the ref_ct_level table where it indicates that the point level is TU-12. The point described in Sample 1 has a level_type of 1036 indicating that it is an MEDT point.

The charinfo field is a key into the ref_ct_charinfo table, which contains all the characteristic information codes which refer to the capacity of a point.

The order_no field is used to internally order groups of points associated with a hardware. For example Sample 2 and 3 show two members of the TU-12 points that may be ordered 1-63. The order_no is displayed in TNAS whenever the points for a hardware are to be wired.

The term_point_code field is a key into the ref_term_point_code table which contains all the possible termination point codes such as TTP, CTP,GTP. The term_type_code field is a key into the ref_term_code table which contains all the possible termination point type codes, i.e. SOURCE, SINK, BID, UNDEF. The interface_code field is a key into the ref_interface_code table which contains all the possible interface codes, i.e. coaxial, fibre optic etc.

A connectivity definition table is then generated such as set out below.

| **Field Names** | **Sample** | **Reference or Foreign Key Table** |
|---|---|---|
| UP_STREAM_POINT_DEF_ID | 11110255 | Point_def |
| DOWN_STREAM_POINT_DEF_ID | 11110211 | Point_def |
| START_DATE | 0 | |
| START_STATUS | I | |
| END_DATE | 99999999 | |
| END_STATUS | I | |

This table is updated when a connectivity relationship is defined by the user between two points belonging to different subhardwares when defining a composite hardware. It is also updated with connectivity values for a hardware definition based on a function definition with connectivity relationships.

This table can be referenced by checking the point_def_ids of points known to be affected by each equipment against the up_stream_point_def_id and the down_stream_point_def_id fields of this table.

If two bi-directional points have connectivity with each other, there are two rows inserted into the table, each point definition will be the UP_STREAM_POINT_DEF_ID in one connectivity definition and DOWN_STREAM_POINT_DEF_ID in the other connectivity definition. Again, connectivity defines interconnection of points between different functions i.e. inter-function.

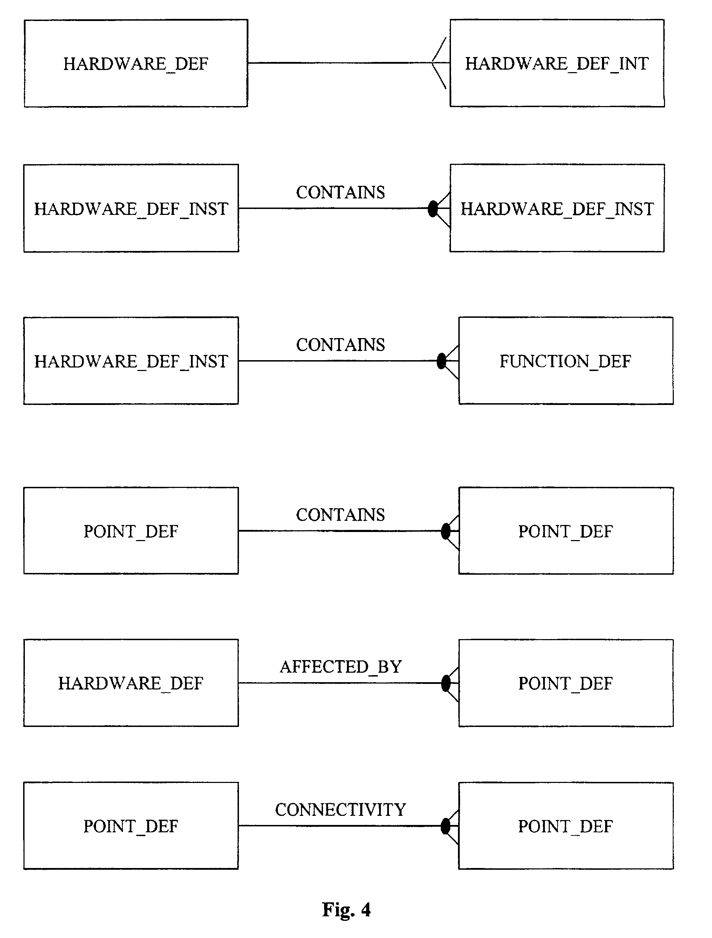

Referring now to Fig. 4, a hardware entity diagram provides an overview of relationships between the parts of the hardware database and links between it and the function database. In practice, the hardware_def table stores a user name for an item of hardware, and the hardware_def_int tables relate to particular system code for different versions of that hardware item. The second level of the entity diagram illustrates how a hardware unit may comprise sub-units. Very importantly the third level illustrates the fact that a hardware unit contains one or more functions. As for functions, points contain points. Points are also affected by a hardware unit or sub-unit, and points are connected to points.

The process of building the model involves generating the function database 4 initially and subsequently generating the hardware database in which hardware definitions incorporate definitions of the associated function. Taking the network section shown in Fig. 2, once a function dataset has been generated for each of the multiplexing and line terminal stages, a set of hardware datasets are then generated. A hardware dataset is created for each multiplexing stage and subsequently a dataset is created for the overall multiplexing from 2 Mb/s to 128 Mb/s.

The function and hardware databases are instantiated to complete the network model 2 of Fig. 1. These two databases together form an equipment model of datasets linked as described above. The equipment model is interrogated to locate nodes which are capable of performing required tasks for network trails. This reveals a set of candidate nodes for making connections to complete the trail. As candidate nodes are selected the start and end points of the equipment model are populated in network model tables. Thus, a network model is gradually built up to define trails comprising connections with reference to the nodes of the equipment model. The nodes are points as described with reference to Fig. 2. A single table correlates entities of the equipment model and entities of the network model. In the network model, trails are uniquely identified.

The equipment model is developed on the basis of what functions can be performed and hardware units of the database 5 are mapped on this basis. This ensures that problems do not arise from changes to capacities and functions in hardware specifications. Also, the point definitions provide an excellent basis for defining trails for the network model. Thus the network model provides an excellent foundation for operations such as equipment allocation, fault analysis and correlation.

The invention is not limited to the embodiments described, but may be varied in construction and detail within the scope of the claims.

## Claims

1. A telecommunication network modelling system (1) comprising a processor connected to user interface (7, 9) and data storage devices, wherein the processor is programmed to build and maintain under user instructions a network model, and to generate network planning and administration outputs in response to user queries by interrogating the model, **characterised in that** the processor network build means comprises:
means for building a dataset defining a plurality of functions;
means for building a dataset defining hardware units related to functions on the basis of the capacity of each hardware unit;
means for interrogating the datasets with a query comprising requirements for communication trails, for identifying available candidate nodes of the hardware dataset, and for interactively selecting from the set of candidate nodes; and
means for generating a network model comprising identifiers of the selected hardware entities which define trail terminations.

2. A system as claimed in claim 1, wherein each hardware dataset is related to a function or it is related to a plurality of child hardware datasets which are each related to a function.

3. A system as claimed in any preceding claim, wherein the function dataset for each function includes:-
function definition records;
point definition records defining interface points to the function;
connectivity definition records defining inter-function point connections; and
containment definition records defining intra-function point containment.

4. A system as claimed in claim 3, wherein the function dataset for each function further comprises records identifying points affected by the function.

5. A system as claimed in any preceding claim, wherein each hardware dataset comprises point definition records defining network interface points corresponding to function points, and containment definition records defining containment relationships between a hardware unit and sub-units, between points, and between the hardware unit and a function.

6. A system as claimed in claim 4 or 5, wherein each hardware dataset comprises connectivity definition records defining inter-connectivity of hardware sub-units.

7. A system as claimed in any of claims 3 to 6, wherein the network model generating means comprises means for populating relational tables with hardware point definition records for trail termination points.

8. A system as claimed in claim 7, wherein the network model generating means comprises means for populating the relational tables with hardware point definition records for connections which together form a trail.

9. A system as claimed in any preceding claim, wherein the network model generating means comprises means for dynamically maintaining a table correlating the equipment model with the network model.

## Patentansprüche

1. Telekommunikationsnetzmodellierungssystem (1), umfassend einen Prozessor, der mit einer Benutzeroberfläche (7, 9) und Datenspeichergeräten verbunden ist, wobei der Prozessor so programmiert ist, dass er nach Benutzeranweisungen ein Netzwerkmodell erstellt und verwaltet sowie als Reaktion auf Benutzeranfragen durch Abfragen des Modells Netzwerkplanungs- und -administrationsausgaben erzeugt, **dadurch gekennzeichnet, dass** das Prozessor-Netzwerkerstellungsmittel Folgendes umfasst:
Mittel zum Erstellen einer Datendatei, die eine Mehrzahl von Funktionen definiert;
Mittel zum Erstellen einer Datendatei, die Hardware-Einheiten in Bezug auf Funktionen auf der Basis der Kapazität jeder Hardware-Einheit definiert;
Mittel zum Abfragen der Datendateien mit einer Anfrage, umfassend Anforderungen für Kommunikationswege, zum Identifizieren verfügbarer Knotenkandidaten der Hardware-Datendatei und zum interaktiven Auswählen aus dem Satz von Knotenkandidaten; und
Mittel zum Erzeugen eines Netzwerkmodells, umfassend Kennungen der gewählten Hardware-Objekte, die Wegterminierungen definieren.

2. System nach Anspruch 1, bei dem sich jede Hardware-Datendatei auf eine Funktion oder auf eine Mehrzahl von untergeordneten Hardware-Datendateien bezieht, die jeweils auf eine Funktion bezogen sind.

3. System nach einem der vorherigen Ansprüche, bei dem die Funktionsdatendatei für jede Funktion Folgendes umfasst:
Funktionsdefinitionsdatensätze;
Punktdefinitionsdatensätze, die Schnittstellenpunkte zu der Funktion definieren;
Konnektivitätsdefinitionsdatensätze, die Interfunktionspunktverbindungen definieren; und
Einschlussdefinitionsdatensätze, die Intrafunktionspunkteinschluss definieren.

4. System nach Anspruch 3, bei dem die Funktionsdatendatei für jede Funktion ferner Datensätze umfasst, die von durch die Funktion betroffene Punkte identifizieren.

5. System nach einem der vorherigen Ansprüche, bei dem jede Hardware-Datendatei Punktdefinitionsdatensätze, die Netzwerkschnittstellenpunkte definieren, die Funktionspunkten entsprechen, und Einschlussdefinitionsdatensätze umfasst, die Einschlussbeziehungen zwischen einer Hardware-Einheit und Subeinheiten, zwischen Punkten sowie zwischen der Hardware-Einheit und einer Funktion definieren.

6. System nach Anspruch 4 oder 5, bei dem jede Hardware-Datendatei Konnektivitätsdefinitionsdatensätze umfasst, die Interkonnektivität von Hardware-Subeinheiten definieren.

7. System nach einem der Ansprüche 3 bis 6, bei dem das Netzwerkmodellerzeugungsmittel Mittel zum Populieren von Verknüpfungstabellen mit Hardware-Punktdefinitionsdatensätzen für Wegterminierungspunkte umfasst.

8. System nach Anspruch 7, bei dem das Netzwerkmodellerzeugungsmittel Mittel zum Populieren von Verknüpfungstabellen mit Hardware-Punktdefinitionsdatensätzen für Verbindungen umfasst, die zusammen einen Weg bilden.

9. System nach einem der vorherigen Ansprüche, bei dem das Netzwerkmodellerzeugungsmittel Mittel zum dynamischen Führen einer Tabelle umfasst, die das Ausrüstungsmodell mit dem Netzwerkmodell korreliert.

## Revendications

1. Système de modélisation de réseau de télécommunications (1) comprenant un processeur connecté à une interface d'utilisateur (7, 9) et des dispositifs de mémorisation de données, dans lequel le processeur est programmé pour construire et tenir à jour sous des instructions d'utilisateur un modèle de réseau, et pour générer des sorties de planification et d'administration de réseau en réponse à des interrogations d'utilisateur en interrogeant le modèle, **caractérisé en ce que** le moyen de construction de réseau de processeur comprend :
un moyen pour construire un ensemble de données définissant une pluralité de fonctions ;
un moyen pour construire un ensemble de données définissant des unités matérielles liées à des fonctions en fonction de la capacité de chaque unité matérielle ;
un moyen pour interroger les ensembles de données avec une interrogation comprenant des exigences de pistes de communication, pour identifier des noeuds candidats disponibles de l'ensemble de données matérielles, et pour sélectionner de manière interactive parmi l'ensemble de noeuds candidats ; et
un moyen pour générer un modèle de réseau comprenant des identifiants des entités matérielles sélectionnées qui définissent des terminaisons de pistes.

2. Système selon la revendication 1, dans lequel chaque ensemble de données matérielles est lié à une fonction ou est lié à une pluralité d'ensembles de données matérielles enfants qui sont chacun liés à une fonction.

3. Système selon l'une quelconque des revendications précédentes, dans lequel l'ensemble de données de fonction pour chaque fonction comporte :
des enregistrements de définition de fonction ;
des enregistrements de définition de points définissant des points d'interface avec la fonction ;
des enregistrements de définition de connectivité définissant des connexions de points inter-fonctions ; et
des enregistrements de définitions de contenu définissant un contenu de points intra-fonction.

4. Système selon la revendication 3, dans lequel l'ensemble de données de fonction pour chaque fonction comprend en outre des enregistrements identifiant des points affectés par la fonction.

5. Système selon l'une quelconque des revendications précédentes, dans lequel chaque ensemble de données matérielles comprend des enregistrements de définitions de points définissant des points d'interface de réseau correspondant à des points de fonctions, et des enregistrements de définitions de contenu définissant des relations de contenu entre une unité matérielle et des sous-unités, entre des points, et entre l'unité matérielle et une fonction.

6. Système selon la revendication 4 ou 5, dans lequel chaque ensemble de données matérielles comprend des enregistrements de définition de connectivité définissant une interconnectivité de sous-unités matérielles.

7. Système selon l'une quelconque des revendications 3 à 6, dans lequel le moyen de génération de modèle de réseau comprend un moyen pour peupler des tables relationnelles avec des enregistrements de définitions de points matériels pour des points de terminaisons de pistes.

8. Système selon la revendication 7, dans lequel le moyen de génération de modèles de réseau comprend un moyen pour peupler les tables relationnelles avec des enregistrements de définitions de points matériels pour des connexions qui forment ensemble une piste.

9. Système selon l'une quelconque des revendications précédentes, dans lequel le moyen de génération de modèle de réseau comprend un moyen pour tenir à jour dynamiquement une table mettant en corrélation le modèle d'équipement avec le modèle de réseau.
